(19) **Europäisches Patentamt**

**European Patent Office**

**Office européen des brevets**

(11) **EP 1 018 573 A2**

(12) **EUROPEAN PATENT APPLICATION**

(43) Date of publication:
   **12.07.2000  Bulletin 2000/28**

(51) Int Cl.⁷: **D07B 1/06**

(21) Application number: **99306716.4**

(22) Date of filing: **24.08.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventor: **Han, Yong Sik**<br>**Yusung-Gu, Taejon (KR)** |
| (30) Priority: **08.01.1999  KR 9900317** | (74) Representative: **Brunner, Michael John**<br>**GILL JENNINGS & EVERY**<br>**Broadgate House**<br>**7 Eldon Street**<br>**London EC2M 7LH (GB)** |
| (71) Applicant: **Hankook Tire Co., Ltd.**<br>**Kangnam-Gu, Seoul (KR)** | |

(54) **A radial tyre having a carcass to which steel cord is applied**

(57)   The present invention relates to a passenger car and light truck radial tyre in which a steel cord is applied to the carcass. The steel cord according to the present invention is a 1 x 3 steel cord which is formed by twisting filaments of three strips together in a constant direction, wherein the surface of each filament consisting of carbon steel having a carbon content of 0.70~0.96 weight % is plated with brass, the tensile strength of the filament prior to stranding into steel cord is in the range of 260~375kgf/mm2, and said cord has relatively a small twist pitch to said filament diameter ratio, whereby the steel cord has improved fatigue resistance and anti-flare properties. In addition, the radial tyre in which the said steel cord is applied to the carcass can achieve the reduction of fuel consumption rate, improvement of handling property, enhancement of dimensional stability and improvement of tyre uniformity.

Fig. 1

**Description**

The present invention relates to a tyre having a steel cord and, more particularly, to a radial tyre for a passenger car and light truck. By use of a steel cord of which the elongation varies very little with stress and heat, the radial tyre in which the said steel cord is applied to the carcass can achieve a reduction of fuel consumption rate, improvement of handling property, enhancement of dimensional stability and improvement of tyre uniformity.

In general, in most belt cords used in pneumatic radial tyres, a steel cord formed by twisting several strips of metal lines, namely steel filaments, is used, however, the cord used in the carcass is mostly made of polyester or rayon and partly of nylon.

The reason why polyester or rayon are used for the carcass cord instead of the steel cord is that, even though the above cord made of polyester or rayon compares unfavorably with the steel cord in respect of the dimensional stability, anti-heat property and elasticity etc, they are more advantageous than the steel cord in the property of shock absorbing which is the defect of the steel cord.

However, at present, since road conditions in all parts of the world have greatly improved, ther application of polyester or rayon cord to the tyre carcass of a passenger car in order to improve riding property is becoming less significant. On the contrary, the reduction in the fuel consumption rate, the improvement in the handling property, the enhancement of dimensional stability and the improvement of uniformity of tyre have remained in demand.

The object of the present invention is to solve the above problems, and is to provide a passenger car and light truck radial tyre which reduces the fuel consumption rate and exhibits improved handling property, enhanced dimensional stability and improved uniformity of the tyre by replacing the cord applied to the carcass of the tyre with the steel cord composed of three strips of twisted filaments.

According to the present invention there is provided a passenger car and light truck radial tyre in which a steel cord is applied to the carcass, characterized in that said steel cord is 1 x 3 steel cord (1), wherein the steel cord is formed by twisting three strips or filaments (1a) , which are produced through the process of drawing carbon steel, consisting of carbon steel having a carbon content of 0.70~0.96 weight %, and plating brass on the surface of said filaments; the tensile strength of the filament prior to stranding into steel cord is in the range of 260~375 kgf/mm$^2$; the diameter (a) of each filament (1a) is 0.15~0.30mm; and the twisting pitch (b) is in the range of 10a~60a.

An example of a steel cord for a tyre according to the present invention, will now be described with reference to the accompanying drawings, in which:-

Fig.1 is a side view of a steel cord applied to a carcass according to the present invention; and
Fig.2 is a cross-sectional view of the cord of Fig.1 taken along lines I-I.

The invention will now be illustrated in detail with reference to the accompanying drawings.

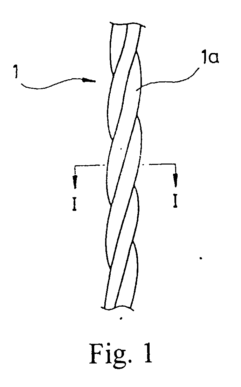

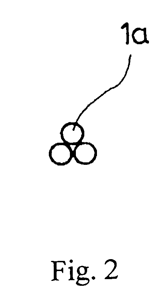

Fig. 1 is a front view of a steel cord for a tyre carcass according to the present invention, and Fig. 2 is a cross-sectional view of I-I line of Fig. 1. Herein, the steel cord (1) applied to a carcass according to the present invention is a 1 x 3 steel cord, i.e. one which is formed by twisting three strips or filaments (1a) of together in a constant direction, wherein the surface of each filament (1a), consisting of carbon steel having a carbon content of 0.70~0.96 weight %, is plated with brass, the tensile strength of the filament prior to stranding into steel cord is in the range of 260~375kgf/mm$^2$, the space between the filaments (1a) is decreased, and a short twist pitch is formed.

Herein, the relation between the diameter of the said filament (1a) and the twist length is as follows.

$$a = 0.15 \sim 0.30mm, b = 10a \sim 60a$$

where a = filament diameter (mm) and b = twist length (mm)

A comparison between the elongation properties of the steel cord (1) according to the present invention and the cord for a carcass according to the prior art is shown in the following Table 1. The data of the present invention shown in Table 1 reveal that the steel cord (1) of the invention exhibits excellent dimensional stability in comparison to the cord of the prior art.

In addition, by making relatively a small twist pitch to said filament diameter ratio, the fatigue limit stress level of the cord in the completely reversed cycle of stress condition using rotating beam fatigue tester (RBT) becomes above 90kgf/mm$^2$ ~ 100 kgf/mm$^2$, and the range over which flaring of the cord takes place upon cutting the cord is reduced to below 10m and thereby, in the event that the said steel cord is applied to the carcass, the fatigue failure and phenomena of the cord unwinding caused by undergoing almost complete repetitive stress fatigue can be prevented. Furthermore, the elasticity decreases slightly from 98~100% to 90 ~ 97%, and thereby not only is the turn-up property of the carcass in the building process of the tyre improved, but also the durability of tyre is improved by decreasing the heat generation occurring when driving by decreasing the bending stiffness of the steel cord.

The physical properties of the above 1 x 3 steel cord according to the present invention are shown in detail in Table 2. Herein, the steel cord (1) used in practice is a carbon steel having carbon content of 0.82 weight %, which the filament diameter (a) is 0.20mm, the twist pitch (b) is 25a, i.e. 5.0mm, and the value in parentheses ( ) represents the rubber coverage % after adhesion test.

Table 1

|  | Polyester cord 1500d/2 | Rayon cord 1650d/2 | Nylon cord 840d/2 | Steel cord of the present invention |
|---|---|---|---|---|
| Shrinkage(%) | 2.7(150°C 0min, thermal shrinkage) | 2.0(150°C 30min, thermal shrinkage) | 10(100°C 0min, hot water shrinkage) | 0 |
| Elongation at Specific load(%) | 3.5 (load 6.8kgf ) | 2.9 (load 6.8kgf) | 8.5 (load 4.5kgf) | Below 1.0 (load 6.8kgf) |
| Elongation at Break (%) | 15 | 13 | 20 | 2.5 |
| Shrinkage + Elongation at Specific load(%) | 6.2 | 4.9 | 18.5 | Below 1.0 |
| * d means denier |  |  |  |  |

Table 2

| Item / Classification |  | Steel cord of the present invention |
|---|---|---|
| Plating characteristic | Plating material (Cu, Zn (wt%)) | 63.7, 36.3 |
|  | Plating thickness (µm) | 0.21 |
| Mechanical properties | Lay (twist) length (mm) | 5.0 |
|  | Lay direction | Right |
|  | Diameter of filament (mm) | 0.20 |
|  | Diameter of steel cord (mm) | 0.41 |
|  | Breaking force(kgf) | 32 |
|  | Elongation at break(%) | 2.5 |
|  | Low load elongation(%) (load 0.2∼1.6kg) | 0.071 |
|  | Linear density(g/m) | 0.78 |
|  | Elasticity (%, by loop tester) | 95 |
|  | Flare (mm, in the event of cutting) | None |
|  | Bending stiffness (g-cm/a steel cord, by Taber stiffness tester) | 12 |
|  | Anti-fatigue property (number of cycles, by RBT, stress 90 kg/mm$^2$) | more than 1 million cycles |

Table 2   (continued)

| Item / Classification | | | Steel cord of the present invention |
|---|---|---|---|
| Rubber adhesion force (kgf/ 0.5inch, ASTM method) | Initial (160 ×20min) | | 32(95) |
| | Heat aging(100 °C) | 4 days | 31(95) |
| | | 8 days | 30(90) |
| | | 12 days | 29(90) |
| | Humidity condition (70°C *96%R/H) | 4 days | 30(90) |
| | | 8 days | 29(90) |
| | | 12 days | 28(85) |
| | Hot water Condition (70EC) | 4 days | 32(90) |
| | | 8 days | 31(90) |
| | | 12 days | 31(90) |
| | Salinity condition (20% NaCl) | 4 days | 26(80) |
| | | 8 days | 22(80) |
| | | 12 days | 24(75) |

As described above, by using the steel cord in the carcass of a radial tyre for a passenger car and light truck, the present invention can achieve the effects of reduction in the fuel consumption rate, improvement in handling property, and enhancement in dimensional stability and improvement in uniformity of the tyre.

## Claims

1.  A passenger car and light truck radial tyre in which a steel cord is applied to the carcass, characterized in that said steel cord is 1 x 3 steel cord (1), wherein the steel cord is formed by twisting three strips or filaments (1a), which are produced through the process of drawing carbon steel, consisting of carbon steel having a carbon content of 0.70~0.96 weight %, and plating brass on the surface of said filaments; the tensile strength of the filament prior to stranding into steel cord is in the range of 260-375 kgf/mm$^2$; the diameter (a) of each filament (1a) is 0.15~0.30mm; and the twisting pitch (b) is in the range of 10a~60a.

2.  The passenger car and light truck radial tyre of claim 1, wherein the steel cord (1) has the characteristics that within the load range of 0.2~1.6kgf the elongation is below 0.30%, elasticity based on the loop test is above 90%, and the stress level of fatigue limit upon completely reversed cycle of stress condition is above 90 kgf/mm$^2$.

3.  The passenger car and light truck radial tyre of claim 1, wherein the steel cord (1) has the characteristics that the range over which flaring occurs upon cutting the cord is below 10mm, and the thickness of the rubber topping including steel cord is d+0.2~d+2.0mm, where d is the diameter of the steel cord (1).

Fig. 1

Fig. 2